# EUROPÄISCHE PATENTSCHRIFT

(11) **EP 0 663 732 B1**
(45) Veröffentlichungstag und Bekanntmachung des Hinweises auf die Patenterteilung: **19.12.2001**
(21) Anmeldenummer: 95100433.2
(22) Anmeldetag: 13.01.1995
(51) Int. Cl.: H04B 1/10, H04B 1/16

(54) **Verfahren zur Ermittlung von Störsignalen im frequenzmodulierten Empfangssignal eines Rundfunkempfängers und Schaltungsanordnung zur Durchführung dieses Verfahrens**
Circuit and method for determining the type of noise or interference in a FM modulated broadcast signal receiver
Procédé et circuit pour déterminer le type de bruit ou interférence dans un récepteur de diffusion à fréquence modulée

(30) Priorität: 15.01.1994 DE 4401053
(43) Veröffentlichungstag der Anmeldung: 19.07.1995
(73) Patentinhaber: BECKER GmbH, D-76307 Karlsbad (DE)
(72) Erfinder: Benz, Christoph, Dipl. Ing., D-76337 Waldbronn (DE); Kadenbach, Rudolf, Dipl. Ing., D-76307 Karlsbad (DE)
(74) Vertreter: Patentanwälte Westphal, Mussgnug & Partner

(56) Entgegenhaltungen:
- EP-A- 0 565 255
- DE-A- 3 721 918

## Beschreibung

Verfahren zur Beurteilung von Störsignalen im frequenzmodulierten Empfangssignal eines Rundfunkempfängers und Rundfunkempfänger mit einer Schaltungsanordnung zur Durchführung dieses Verfahrens

Die Erfindung betrifft ein Verfahren zur Beurteilung von Störsignalen im frequenzmodulierten Empfangssignal eines Rundfunkempfängers, beispielsweise eines Autoradios, durch Auswertung der im Feldstärkesignal enthaltenen Wechselspannungsanteile. Die Erfindung betrifft ferner einen Rundfunkempfänger mit einer Schaltungsanordnung zur Durchführung des Verfahrens.

Ein solches Verfahren ist aus der DE 37 21 918 C bekannt. Die Feldstärke des Empfangssignals eines Rundfunksenders ist ein brauchbares Kriterium für die Qualität des Empfangssignals. Es ist daher bekannt, dass die ZF-Stufen eines Rundfunkempfängers für frequenzmodulierte Empfangssignale einen Ausgang besitzen, an dem eine der Empfangsfeldstärke proportionale Gleichspannung vorhanden ist. Es ist außerdem bekannt, dass diese Gleichspannung beim Auftreten von Empfangsstörungen, welche durch Mehrwegeempfang, Nachbarkanalempfang und/oder Gleichkanalempfang verursacht sein können, von Wechselspannungsanteilen mit unterschiedlicher Frequenz überlagert ist.

Bei der bekannten Lösung werden die im Feldstärkesignal enthaltenen Wechselspannungsanteile aus verschiedenen Frequenzbereichen unterschiedlich stark verstärkt und gleichgerichtet; die aus den Wechselspannunganteilen gewonnene Gleichspannung wird als Maß für die Störung gewertet.

Dieses bekannte Verfahren weist den Nachteil auf, dass beim Auftreten von Empfangsstörungen, welche auf verschiedenen Ursachen beruhen, zwar eine den Empfangsstörungen proportionale Regelspannung erzeugt wird, die Regelspannung jedoch nicht die Störungsursachen unterscheiden kann und daher mit ihrer Hilfe auch nicht die individuellen Störungsursachen, welche verschiedene Behebungsstrategien erforderlich machen, beseitigt werden können.

Das der Erfindung zugrunde liegende technische Problem besteht darin, das bekannte Verfahren in der Weise zu verbessern, dass aus den dem Feldstärkesignal überlagerten Wechselspannungsanteilen Signale erzeugt werden, welche das Vorliegen einer Empfangsstörung anzeigen und zugleich repräsentativ für die bestimmte Störungsursache sind und damit eine gezielte Störbehebung je nach Störursachenart ermöglicht wird.

Dieses technische Problem wird erfindungsgemäß dadurch gelöst, dass der Wechselspannungsanteil des Feldstärkesignals den folgenden Prüfungen unterzogen wird:
a) Ist im Wechselspannungsanteil eine mit der Pilottonfrequenz identische Frequenz vorhanden?
b) Ist die Pilottonfrequenz im Wechselspannungsanteil im Wesentlichen andauernd enthalten?
c) Sind im zeitlichen Mittel die von der Pilottonfrequenz verschiedenen Frequenzen oberhalb der Pilottonfrequenz häufiger vorhanden als die unterhalb der Pilottonfrequenz?
dass bei Nicht-Bestätigung der Prüfung a) die Störung als Nachbarkanalstörung beurteilt wird,
dass bei Bestätigung der Prüfung a) und bei Nicht-Bestätigung der Prüfung b) die Störung als "keine Störung" beurteilt wird, dass bei Bestätigung der Prüfung a) und der Prüfung b) und bei Feststellung einer größeren Häufigkeit niedrigen Frequenzen aus der Prüfung c) die Störung als Gleichkanalstörung beurteilt wird,
dass bei Bestätigung der Prüfung a) und der Prüfung b) und bei Feststellung einer größeren Häufigkeit höherer Frequenzen aus der Prüfung c) die Störung als Mehrwegestörung beurteilt wird.

Durch das erfindungsgemäße Verfahren und die erfindungsgemäße Schaltung dazu können die Störungen ihrer Art nach unterschieden werden, indem aus dem Wechselspannungsanteil im Feldstärkesignal Steuersignale gewonnen werden, welche jeweils repräsentativ für eine Störungsart sind. Mit Hilfe dieser Steuersignale können dann die der Störungsart angemessenen Störbehebungsstrategien gezielt eingesetzt werden.

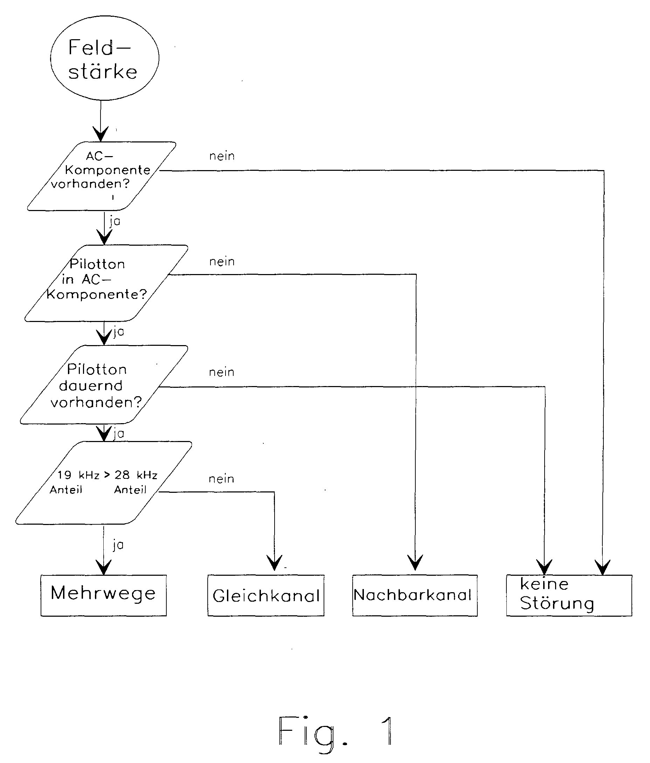

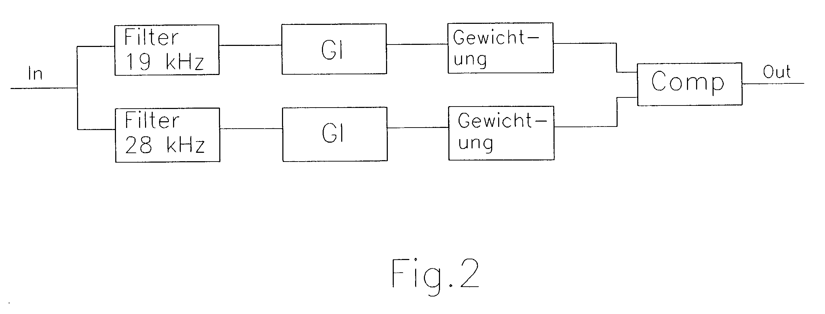

Weitere vorteilhafte Einzelheiten der Erfindung sind in den Ansprüchen 2 bis 8 enthalten. Die Erfindung und ihre vorteilhaften Wirkungen sind nachstehend anhand der Figuren 1 und 2 erläutert.

Es zeigen:
- Fig. 1: einen Verfahrensablauf einschließlich der Vorabprüfung bei der Ermittlung der für die individuellen Störungsarten repräsentativen Steuersignale und
- Fig. 2: das Blockschaltbild einer Schaltungsanordnung zur Ermittlung der Steuersignale, welche repräsentativ für Mehrwege- und Gleichkanalempfangsstörungen sind.

Wie aus Fig. 1 zu erkennen ist, wird das Feldstärkesignal zunächst darauf untersucht, ob überhaupt ein Wechselspannungsanteil der Feldstärke-Gleichspannung überlagert ist. Trifft das nicht zu, ist keine Störung vorhanden und eine nachfolgende Untersuchung auf die Störungsart kann somit entfallen.

Wird dagegen ein Wechselspannungsanteil detektiert, so wird in einem weiteren Schritt geprüft, ob die Pilottonfrequenz im Wechselspannungsanteil enthalten ist.

Tritt die Pilottonfrequenz nicht auf, liegt eine durch Empfang eines Nachbarkanalsenders verursachte Störung vor. Damit ist eine der Störungsarten eindeutig selektiert und das individualisierende Steuersignal wird abgegeben.

Ist die Pilottonfrequenz nur zeitweise, aber nicht andauernd vorhanden, so lässt sich daraus schließen, dass weder Gleichnoch Nachbarkanal- noch Mehrwegestörungen vorhanden sind. Der Wechselspannungsanteil wird in diesem Fall im Empfänger selbst ohne Vorliegen einer Störung erzeugt. Er entsteht bei Empfangssignalen, die mit hohem Hub moduliert sind, durch FM-AM-Wandlung an den Flanken des ZF-Filters. Auch das Untersuchungsergebnis "keine Störung" kann ebenso durch ein individuelles Steuersignal angezeigt wrden.

Ist die Pilottonfrequenz dagegen im zeitlichen Mittel häufig im Wesentlichen andauernd vorhanden, wird untersucht, ob im Frequenzspektrum außer der Pilottonfrequenz - nach heutigem Standard 19 kHz - eine höhere Frequenz, welche vorzugsweise unterhalb der doppelten Pilottonfrequenz liegt, also beispielsweise ein 28 kHz-Anteil vorhanden ist. Trifft das zu, werden die 19 kHz-Anteile und die beispielhaften 28 kHz-Anteile miteinander verglichen.

Die Unterscheidung, ob es sich bei der angezeigten Empfangsstörung überwiegend um eine Mehrwegeempfangsstörung oder um eine Störung durch einen Gleichkanalsender handelt, erfolgt dadurch, dass das Spektrum des Feldstärkesignals bei zwei repräsentativen Frequenzen schmalbandig verglichen wird.

Dieser Vergleich erfolgt bei:
1. Der Pilottonfreuenz, weil das die einzige modulations-unabhängige Komponente des FM-Empfangssignals ist. Wenn die Pilotton-Frequenz im Feldstärkesignal dauernd vorhanden ist, liegt mit Sicherheit eine Störung vor.
2. Einem Frequenzbereich, in dem auch bei hohem Hub nur mit geringen Wechselspannungsanteilen im Feldstärkesignal zu rechnen ist. Ein solcher Frequenzbereich liegt z. B. bei 28 kHz. Weil im Stereo-Modulationssignal Differenzanteile L-R für eine NF in der beispielhaften Frequenz von ca. 10 kHz statistisch mit geringen Amplituden vertreten sind, ist auch der entsprechende Bereich im MPX-Signal (28 bzw. 48 kHz) im statistischen Mittel schwach moduliert. Daher sind Störkomponenten auf dem Feldstärkesignal als Folge hohen Hubes in diesen Bereichen am wenigsten zu erwarten.

Der Vergleich der Amplituden beider Frequenzanteile lässt eine sehr sichere Zuordnung der Störungsursachen zu. Wegen der vorstehend genannten Eigenschaften überwiegt bei Mehrwegeempfangsstörungen der 19 kHz-Anteil deutlich. Die absolute Größe der 19- bzw. höherfrequenten 28 kHz-Anteile ist der Störungsintensität proportional, während ein relatives Übergewicht des 19 kHz-Anteils nur bei Mehrwegeempfangsstörungen auftritt. Somit können vorteilhafterweise diese Störungsarten auch bei geringer Intensität gut von Gleichkanalstörungen, die von Natur aus nur kleine Wechselspannungsanteile erzeugen, getrennt werden.

Durch dieses sehr einfache Unterscheidungskriterium gelingt erfindungsgemäß eine sehr sichere Unterscheidung dieser Störarten, was die Anforderungen an die Umsetzung in eine konkrete Schaltungsanordnung sehr verringert und die sichere Behebung dieser Störungen auf einfache Weise ermöglicht.

Die ermittelten störartindividuellen Signale können dazu verwendet werden, um einerseits geeignete Strategien zur Behebung der jeweiligen Störungen in Gang zu setzen, z. B. durch Umschalten des Empfängers auf eine andere Antenne bei Mehrwegeempfang, oder ggf. durch allgemeinere Strategien die Auswirkung der Störung zu mildern, z. B. durch Umschalten von Stereo- auf Monowiedergabe.

Bei Anwendung des erfindungsgemäßen Verfahrens wird sowohl das Vorliegen oder Nichtvorliegen einer Empfangsstörung erkannt, als auch die jeweilige Störungsursache ermittelt. Prinzipiell kann davon ausgegangen werden, dass bei Vorhandensein eines Wechselspannunganteils im Feldstärkesignal eine Empfangsstörung vorliegt.

Sollte ein Verfahren gesucht werden, das nur das Vorhandensein von Nachbarkanalstörungen eindeutig erkennt und anzeigt, die anderen Störungsarten dagegen ignoriert, so genügt es zu prüfen, ob ein Wechselspannungsanteil vorhanden ist und ob im Wechselspannungsanteil die Pilottonfrequeriz enthalten ist. Wird bei Vorliegen eines Wechselspannungsanteils jedoch keine Pilottonfrequenz detektiert, so handelt es sich um eine Störung, die durch Empfang eines Nachbarkanals verursacht wird.

Ein Blockschaltbild für eine Schaltunganordnung zur Ermittlung von Mehrwege- und/oder Gleichkanalempfangsstörungen ist aus Fig. 2 ersichtlich. Das Feldstärkesignal wird jeweils einem Filter mit einer Mittenfrequenz von 19 kHz und von beispielhaften höherfrequenten 28 kHz zugeführt. Die Ausgangssignale der Filter werden gleichgerichtet. Anschließend werden die Ausgangssignale der Gleichrichter - erforderlichenfalls unter Zwischenschaltung von Gewichtungsschaltungen - einem Komparator Comp zugeführt. In diesem wird ermittelt, welche Störungsursache vorliegt, ein störartindividuelles Steuersignal erzeugt, und dann werden die entsprechenden Maßnahmen veranlaßt. Durch die Verwendung der Gewichtungsschaltungen lässt sich ein differenziertes Auswerten der Anteile gewährleisten, das einerseits qualitative und andererseits quantitative Effekte berücksichtigt. Durch diese Gewichtungsschaltungen mit der geeigneten Wahl der Gewichtungsfaktoren wird die Störerkennungssicherheit wesentlich erhöht.

## Patentansprüche

1. Verfahren zur Beurteilung von Störsignalen im frequenzmodulierten Empfangssignal eines Rundfunkempfängers, wie eines Autoradios, durch Auswertung des im Feldstärkesignal enthaltenen Wechselspannungsanteils, **dadurch gekennzeichnet, daß** der Wechselspannungsanteil den folgenden Prüfungen unterzogen wird:
a) Ist im Wechselspannungsanteil eine mit der Pilottonfrequenz identische Frequenz vorhanden?
b) Ist die Pilottonfrequenz im Wechselspannungsanteil im wesentlichen andauernd enthalten ?
c) Sind im zeitlichen Mittel die von der Pilottonfrequenz verschiedenen Frequenzen oberhalb der Pilottonfrequenz häufiger vorhanden als die unterhalb der Pilottonfrequenz?
daß bei Nicht-Bestätigung der Prüfung a) die Störung als Nachbarkanalstörung beurteilt wird,
daß bei Bestätigung der Prüfung a) und bei Nicht-Bestätigung der Prüfung b) die Störung als "keine Störung" beurteilt wird,
daß bei Bestätigung der Prüfung a) und der Prüfung b) und bei Feststellung einer größeren Häufigkeit niedrigen Frequenzen aus der Prüfung c) die Störung als Gleichkanalstörung beurteilt wird,
daß bei Bestätigung der Prüfung a) und der Prüfung b) und bei Feststellung einer größeren Häufigkeit höherer Frequenzen aus der Prüfung c) die Störung als Mehrwegestörung beurteilt wird.

2. Verfahren nach Anspruch 1,
**dadurch gekennzeichnet, daß** vor der Prüfung a) eine Vorabprüfung auf das Vorliegen eines Wechselspannungsanteils durchgeführt wird und beim Nichtvorhandensein eines solchen Anteils ein Steuersignal für "keine Störung" abgeben wird.

3. Verfahren nach einem der vorstehenden Ansprüche,
**dadurch gekennzeichnet, daß** die Unterscheidung zwischen einer Mehrwegeempfangsstörung und einer Gleichkanalempfangsstörung durch die Prüfung c) mittels Vergleich des von der Pilottonfrequenz erzeugten Anteils mit einem andersfrequenten Anteil im Wechselspannungsanteil erzielt wird.

4. Verfahren nach Anspruch 3,
**dadurch gekennzeichnet, daß** als andersfrequenter Anteil ein gegenüber dem durch den Pilotton erzeugten Anteil höherfrequenter Anteil gewählt wird.

5. Verfahren nach Anspruch 4,
**dadurch gekennzeichnet, daß** der höherfrequenter Anteil im Bereich von 28 kHz liegend gewählt wird.

6. Rundfunkempfänger mit einer Schaltungsanordnung zur Durchführung des Verfahrens nach den vorstehenden Ansprüchen,
**gekennzeichnet durch** zwei schmalbandige Filter, deren Eingänge (In) mit dem Feldstärkesignal-Ausgang der Zwischenfrequenzstufe des Rundfunkempfängers verbunden sind und von denen das eine Filter eine Mittenfrequenz von 19 kHz und das zweite Filter eine andere Mittenfrequenz besitzt, sowie den Filtern nachgeschaltete Gleichrichter (GI), deren Ausgänge mit dem Eingang eines Komparators (Comp) verbunden sind.

7. Rundfunkempfänger mit einer Schaltungsanordnung nach Anspruch 6,
**dadurch gekennzeichnet, daß** zwischen den Gleichrichtern (Gl) und dem Komparator (Comp) Gewichtungsschaltungen vorgesehen sind.

## Claims

1. A method of assessing interference signals in the frequency-modulated incoming signal of a radio receiver, such as a car radio, by evaluating the alternating component contained in the field strength signal, **characterised in that** the alternating component undergoes to the following tests:
a) is a frequency identical to the pilot tone frequency present in the alternating component?
b) is the pilot tone frequency contained substantially constantly in the alternating component?
c) on a time average, of the frequencies which are different from the pilot tone frequency are those above the pilot tone frequency more often present than those below the pilot tone frequency?
**in that**, if the answer to test a) is no, the interference is assessed as adjacent-channel interference,
**in that**, if the answer to test a) is yes and that to test b) is no, the interference is assessed as "no interference",
**in that**, if the answer to tests a) and b) is yes and test c) reveals a greater frequency of low frequencies, the interference is assessed as common-channel interference,
**in that**, if the answer to tests a) and b) is yes and test c) reveals a greater frequency of higher frequencies, the interference is assessed as multipath interference.

2. A method according to claim 1,
**characterised in that**, prior to test a), a preliminary test for the presence of an alternating component is performed and, in the absence of such a component, a control signal for "no interference" is emitted.

3. A method according to one of the preceding claims,
**characterised in that** differentiation between multipath reception interference and common-channel reception interference is achieved by test c) by comparing the component produced by the pilot tone frequency with a component of another frequency in the alternating component.

4. A method according to claim 3,
**characterised in that** a component of a higher frequency than the component produced by the pilot tone is selected as the component of another frequency.

5. A method according to claim 4,
**characterised in that** the higher frequency component is selected in the region of 28 kHz.

6. A radio receiver with circuitry for performing the method according to the preceding claims,
**characterised by** two narrow-band filters, whose inputs (In) are connected with the field strength signal output of the intermediate frequency stage of the radio receiver and of which the one filter has a centre frequency of 19 kHz and the second filter has a different centre frequency, and by rectifiers (GI) connected downstream of the filters, whose outputs are connected with the input of a comparator (Comp).

7. A radio receiver having circuitry according to claim 6,
**characterised in that** weighting circuits are provided between the rectifiers (GI) and the comparator (Comp).

## Revendications

1. Procédé d'évaluation de signaux perturbateurs contenus dans un signal de réception à modulation de fréquence d'un récepteur radio tel qu'un autoradio, par l'exploitation de la composante de tension alternative contenue dans le signal d'intensité de champ,
**caractérisé en ce qu'**
on soumet la composante de tension alternative aux contrôles suivants :
d) la composante de tension alternative contient -elle une fréquence identique à la fréquence du son pilote ?
e) la fréquence pilote est-elle contenue de manière essentiellement permanente dans la composante de tension alternative ?
f) les fréquences différentes de la fréquence du son pilote au-dessus de cette fréquence du son pilote sont-elles plus fréquentes que celles en dessous de la fréquence du son pilote, en moyenne dans le temps ? et
en cas de non confirmation du contrôle a), on estime que la perturbation est une perturbation du canal voisin,
- en cas de confirmation du contrôle a) et de non confirmation du contrôle b), on estime que la perturbation est une « non perturbation »,
- en cas de confirmation du contrôle a) et du contrôle b) et en constatant une occurrence plus grande des fréquences basses selon le contrôle c), on considère que la perturbation est une perturbation de canal identique,
- et en cas de confirmation du contrôle a) et du contrôle b) et en constatant une occurrence plus grande des fréquences plus élevées du contrôle c), on estime que la perturbation est une perturbation de chemins multiples.

2. Procédé selon la revendication 1,
**caractérisé en ce qu'**
avant le contrôle a), on fait un contrôle préalable de la présence d'une composante de tension alternative et en l'absence d'une telle composante, on émet un signal de commande indiquant « pas de perturbation ».

3. Procédé selon l'une quelconque des revendications précédentes,
**caractérisé en ce qu'**
on distingue entre une perturbation de réception par chemins multiples et une perturbation de réception par le même canal par le contrôle c) en comparant la composante générée par la fréquence du son pilote à une composante de fréquence différente dans la composante de tension alternative.

4. Procédé selon la revendication 3,
**caractérisé en ce que**
comme composante de fréquence différente, on sélectionne une composante de fréquence plus élevée que celle de la composante générée par le son pilote.

5. Procédé selon la revendication 4,
**caractérisé en ce qu'**
on sélectionne la composante de fréquence plus élevée dans la plage située à 28 kHz.

6. Récepteur radio comportant un circuit pour la mise en oeuvre du procédé selon l'une quelconque des revendications précédentes,
**caractérisé par**
deux filtres à bande étroite dont les entrées (In) sont reliées à la sortie du signal d'intensité de champ de l'étage de fréquence intermédiaire du récepteur radio et dont un filtre a une fréquence moyenne de 19 kHz et le second filtre une autre fréquence moyenne ainsi que des redresseurs (GI) en aval des filtres dont les sorties sont reliées à l'entrée d'un comparateur (Comp).

7. Récepteur radio comportant un circuit selon la revendication 6,
**caractérisé par**
des circuits de pondération entre les redresseurs (GI) et le comparateur (Comp).
